# FASCICULE DE BREVET EUROPEEN

(11) **EP 2 553 633 B1**
(45) Date de publication et mention de la délivrance du brevet: **22.07.2020**
(21) Numéro de dépôt: 11714006.1
(22) Date de dépôt: 31.03.2011
(51) Int. Cl.: G06K 19/077, G06K 19/07, G06K 19/073

(54) **OBJET DE COMMUNICATION RADIOFREQUENCE DOUBLE-PORTEE ET PROCEDE DE MISE EN OEUVRE**
Funkkommunikationsgegenstand mit doppelter Reichweite, und Umsetzungsverfahren
Double-range radio frequency communication object and method for implementing same

(30) Priorité: 01.04.2010 EP 10305340
(43) Date de publication de la demande: 06.02.2013
(73) Titulaire: Thales Dis France SA, 92190 Meudon (FR)
(72) Inventeur: THILL, Michel, F-78340 Les Clayes Sous Bois (FR); GRAVEZ, Pierre, F-91430 Nogent Sur Marne (FR); ANTOINE, Matthieu, F-92100 Boulogne-Billancourt (FR)
(74) Mandataire: Milharo, Emilien
(86) Numéro de dépôt international: PCT/EP2011/055053
(87) Numéro de publication internationale: WO 2011/121094

(56) Documents cités:
- EP-A1- 1 143 377
- EP-A1- 1 760 900
- DE-A1- 10 317 682
- FR-A1- 2 779 847
- US-A1- 2003 116 634
- US-B1- 6 685 096

## Description

L'invention se rapporte à un objet et un procédé de communication radiofréquence double-portée.

Plus particulièrement, l'invention se rapporte à un objet de communication comportant des moyens de communication radiofréquence avec un dispositif distant, lesdits moyens de communication étant aptes à établir une première communication de courte portée (CP) et une seconde communication (LP) de plus longue portée que la première.

L'invention trouve application non limitative notamment dans un objet ou dispositif porte-badge comportant une interface carte à circuits intégrés et permettant un accès sécurisé à des équipements ou à des services via ces équipements. L'invention trouve application de préférence dans l'établissement d'une communication Bluetooth ou équivalent avec un dispositif distant. Le dispositif de badge d'authentification communicant sera pris comme exemple afin de démontrer la nature de l'invention. Néanmoins, tout autre dispositif, autonome en énergie et disposant d'une interface de communication radiofréquence sera susceptible d'implémenter l'invention décrite ci-après

L'invention concerne en particulier des dispositifs de communication radiofréquence qui permettent de se connecter à des équipements informatiques. En cas de multiples utilisateurs d'équipements / terminaux (PC), téléphones portables, imprimantes, etc. dans un même environnement dans lequel la distance entre les terminaux est plus courte que le champ radiofréquence notamment celui de la technologie Bluetooth, il se produit des perturbations de communication en raison de la proximité des différents terminaux accessibles par l'utilisateur final.

Le document US 2003/116634 A1 décrit une carte à puce hybride contact et sans contact comprenant une antenne radiofréquence en boucle pour une communication de type inductif. La carte comprend également un interrupteur agissant notamment sur la configuration des spires de l'antenne pour modifier la distance de communication.
La technologie inductive divulguée ne permet pas des communications de longue portée.

Le document FR 2 779 847 A1 décrit un objet portatif à double communication radiofréquence, inductif et hertzien, pour application notamment billettique. L'objet utilise des premiers moyens de communication inductive pour une communication de plus courte portée (billettique) que celle hertzienne mise en œuvre avec des seconds moyens de communication différents des premiers pour des applications autres notamment d'appel d'urgence, d'alarme.
L'objet comprend également des moyens de sélection de la communication.

Le document EP 1 143 377 A1 est relatif à un transpondeur actif pour varier la portée de communication selon le niveau de sécurité requis de différentes applications (bancaire, accès, transport). Il comprend un circuit de gestion de la distance agissant notamment sur la puissance d'amplification du signal d'émission ou sur une valeur de tension de référence de moyens de validation de données.

Le document EP 1 760 900 A1 décrit une étiquette RFID active ou passive dotée de moyens limitant la portée de communication. Elle peut comprendre un interrupteur ou une résistance pour empêcher ou atténuer la portée de communication.

Il y a donc un besoin d'une solution pour résoudre le problème de perturbation des communications notamment dans un tel environnement où de multiples utilisateurs vont chercher à se connecter à différents équipements.

Parmi les solutions existantes dans l'état de l'art, on connait un dispositif comportant un badge d'authentification communicant permettant à un utilisateur de s'authentifier à un système informatique distant (ordinateur personnel, téléphone portable, assistant numérique personnel, etc.). Un échange préalable de proximité entre le porte-badge et un terminal informatique permet d'identifier clairement le terminal choisi par l'utilisateur final et d'établir une communication spécifique voire sécurisée et sans perturbation. Ces moyens d'appairage à faible portée permettent d'éviter les perturbations radiofréquences liées à l'utilisation d'un même équipement informatique par plusieurs utilisateurs.

Actuellement, une première technologie radiofréquence de proximité appelée NFC (disposant d'une portée d'environ 50 cm) est utilisée pour initier la connexion entre le badge d'authentification communiquant et le système informatique distant et, ensuite, la communication se poursuit au travers d'une autre interface de communication radiofréquence basée sur une technologie différente de la première notamment de type Bluetooth. Des puces Bluetooth sont actuellement prévues avec deux ports, l'un pour une communication Bluetooth et l'autre pour une communication NFC.

Cependant, il y a à l'heure actuelle peu de systèmes informatiques équipés nativement de la technologie ISO/IEC 14443 et il est donc nécessaire d'ajouter un lecteur ou adaptateur sans-contact externe via notamment une connexion USB branchée au système informatique pour créer cette interface sans-contact ISO/IEC 14443 et faire bénéficier de la solution ci-dessus à grande échelle.

Le problème à résoudre est alors de trouver une solution équivalente qui soit facilement diffusable à grande échelle sans modification de l'équipement informatique ou sans ajout d'adaptateur radiofréquence de courte portée.

Le principe de l'invention consiste à mettre en œuvre une phase d'initialisation / appairage non pas par la technologie sans-contact, notamment ISO/IEC 14443, mais par l'intermédiaire d'une technologie de communication radiofréquence identique à celle utilisée, notamment Bluetooth, après la phase d'initialisation / appairage, pour échanger entre l'objet communicant et le dispositif ou équipement informatique distant.

Autrement dit, l'invention prévoit de n'utiliser qu'une seule interface physique de communication radiofréquence pour les phases d'initialisation / appairage de la connexion et de communication proprement dite mais en créant une communication de faible portée et de même nature pour la phase d'initialisation / appairage.

L'invention concerne donc un objet de communication conforme aux revendications 1 à 11.

L'invention a également pour objet un procédé permettant d'établir une communication radiofréquence (LP) entre un objet de communication et un dispositif distant (T), selon les revendications 12 à 15.

Selon d'autres caractéristiques, la première communication de courte portée est établie en mettant en œuvre un moyen d'atténuation de la portée du signal, en émission et en réception.

D'autres caractéristiques et avantages de la présente invention apparaîtront plus clairement à la lecture de la description qui suit en relation avec les dessins annexés correspondants dans lesquels:
- La figure 1 est une vue d'un système de communication comprenant un objet de communication selon un premier mode de réalisation de l'invention;
- La figure 2 est une vue d'un objet de communication selon un second mode de réalisation de l'invention;
- La figure 3 est une vue objet d'un objet de communication selon un troisième mode de réalisation de l'invention;
- La figure 4 est une vue objet d'un objet de communication selon un quatrième mode de réalisation de l'invention;
- La figure 5 illustre des étapes du procédé de l'invention pour mettre en œuvre les objets ci-dessus.

### DESCRIPTION DETAILLEE DE L'INVENTION

Description détaillée d'un exemple concret.

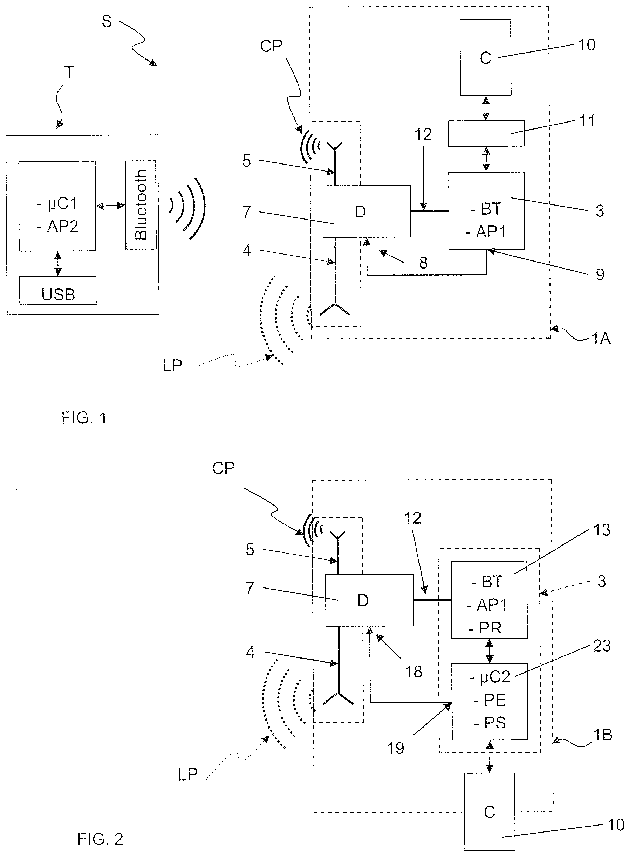

La figure 1 illustre un système conforme à un premier mode de réalisation de l'invention et comprenant un objet portable 1A en relation avec un dispositif distant T.

Selon ce mode de l'invention, l'objet de communication comporte des moyens de communication radiofréquence pour communiquer avec le dispositif distant. Ces moyens de communication sont d'une manière générale aptes à établir une première communication de courte portée (CP) et une seconde communication (LP) de plus longue portée que la première.

Dans l'exemple, l'objet de communication est un dispositif porte-badge 1A comportant une interface ISO 7816 avec un badge sous forme de carte à puce électronique (10, C). Le porte-badge comporte au moins un moyen de communication Bluetooth (BT, 3). Ce moyen peut comporter une puce de circuit intégré ou un processeur Bluetooth 3. Il peut comprendre également un microcontrôleur comportant un module de communication Bluetooth intégré. Le moyen de communication (BT) est relié à au moins une interface physique comportant une antenne 4 et est destiné notamment à établir une communication avec un dispositif représenté ici par un terminal (T) tel qu'un ordinateur et/ou une imprimante. Ce terminal comporte également des moyens de communication Bluetooth et interface correspondants µC1. L'objet comporte ici une interface ISO 7816 ou un translateur de protocole 11 entre le moyen de communication (BT, 3) et la carte à puce (10, C). D'autres interfaces sont toutefois possibles et avec tout périphérique.

Bien que la communication soit en l'occurrence de type Bluetooth, elle pourrait être tout autre comme Wifi.

La communication vise ici à autoriser l'usage de tout ou partie des fonctions de l'ordinateur et/ou de l'imprimante. La communication est par exemple une session d'identification / authentification et/ou de présence d'un droit notamment dans le badge d'un utilisateur qui permet l'utilisation éventuellement partagée du terminal (T).

Selon une caractéristique de ce premier mode, les moyens de communication utilisent le même type de technologie de communication pour la première et la seconde communication. Dans l'exemple, on utilise la communication Bluetooth pour mettre en œuvre la phase d'initialisation / appairage et pour échanger ensuite entre l'objet communicant (1A) et le dispositif distant (T). On utilise une seule interface physique de communication radiofréquence pour les phases d'initialisation / appairage et de communication proprement dite mais en créant une communication de plus courte portée et de même nature pour la phase d'initialisation / appairage.

Selon une caractéristique de ce mode de réalisation, l'objet comprend un composant de communication radiofréquence apte à délivrer une information relative à un état de communication, respectivement connecté ou non connecté. Dans l'exemple, la puce Bluetooth 3 prévoit de délivrer une information (ou signal) relative à son état, connecté ou non, sur un port 9, par exemple du type GPIO. Le cas échéant, le composant de communication radiofréquence Bluetooth accepte une modification logicielle permettant d'obtenir l'état de connexion sur l'entrée/sortie 9 à usage général du composant.

Selon une caractéristique de ce mode de réalisation, l'objet comprend des moyens de configuration de la communication aptes à mettre en œuvre une communication de courte portée (CP) suite à un état de communication longue portée (LP) déconnectée. L'objet comprend par ailleurs des moyens de configuration de la communication aptes à mettre en œuvre une communication longue portée (LP) et le cas échéant de son maintien suite à un état ou phase de communication courte portée (CP) connectée.

Dans l'exemple, les moyens de configuration 3, 4, 5, 7 comprennent une première antenne 5 pour la première communication et une seconde antenne distincte 4 appartenant au même type de technologie pour la seconde communication. La première antenne est configurée de manière à offrir une portée dégradée (courte portée (CP)) par rapport à la seconde antenne, par exemple d'une portée inférieure ou égale à environ 50 cm. Dans l'exemple, l'antenne utilisée pour la communication après l'établissement de la connexion est une antenne possédant des caractéristiques semblables à celles présentes dans les dispositifs actuels. La portée est par exemple de 10 à 100 m. Ces deux antennes 4, 5 sont reliées à la puce de Bluetooth 3 par une liaison 12.

Selon une caractéristique de ce mode de réalisation, la première antenne présente des caractéristiques propres qui n'autorisent qu'une première communication de plus courte portée que celle permise avec la seconde antenne. La première antenne est une version moins performante de la seconde, le terme performance désignant ici la faculté de l'antenne à émettre ou recevoir plus ou moins loin dans l'espace avec la même énergie de référence.

La première antenne est du type PIFA (Printed Inverted F Antenna) ou du type intégrée. Elle n'offre qu'une portée de 50 cm. Contrairement à l'art antérieur où la seconde communication Bluetooth est possible après une communication radiofréquence de type ISO/IEC 14443 via une antenne correspondante, l'invention adopte le même type de communication pour les première et seconde communications (CP, LP).

Les moyens de configuration comprennent également des moyens de sélection de l'antenne. Ici, il s'agit d'un duplexeur d'antenne (D, 7) disposé entre les antennes et la puce Bluetooth. Le duplexeur sélectionne une des deux antennes en fonction d'un signal de commande survenant sur une de ses entrées 8. Ce duplexeur peut comprendre des composants de type diode PIN (Positive Intrinsic Negative). Le duplexeur peut comporter un sélecteur à 2 voire 3 positions correspondant respectivement à la sélection de l'antenne 5, à la sélection de l'antenne 4, ou le cas échéant à une position neutre. Les signaux Bluetooth proviennent du contrôleur Bluetooth 3 via la liaison 12 avec le duplexeur (D).

Les moyens de configuration peuvent comprendre aussi des moyens de contrôle automatique de la sélection des antennes. Dans l'exemple, comme le microcontrôleur Bluetooth 3 est apte à déterminer l'état de la communication (connecté, non connecté) et à émettre un signal (ou information) représentatif de cet état ou renseigner l'extérieur sur l'état de la connexion, l'invention prévoit d'utiliser cette information pour sélectionner une des deux antennes de manière automatique. Le signal peut être aussi un niveau de polarité ou de tension sur une sortie 9 du microcontrôleur BT. L'extérieur peut être par exemple une interface IHM avec l'utilisateur, un plot externe 9.

Le signal (ou information) de commande est alors dirigé vers les moyens de sélection de l'antenne via la liaison entre 8 et 9. Le signal apporté par le microcontrôleur aux moyens de sélection permet de piloter la sélection ou de sélectionner l'antenne adéquate selon la session à mettre en œuvre (initialisation / appairage / reconnexion après initialisation / appairage préétablies) et/ou selon l'état de la connexion en cours.

L'objet portable, dans l'exemple, comprend des moyens de mise en œuvre d'une étape d'initialisation ou d'appairage entre l'objet portable et le terminal. Cette étape permet de sécuriser la communication ultérieure et/ou d'éviter des perturbations avec d'autres communications environnantes. L'appairage consiste en un échange de secret, de clé de chiffrement, ou d'identifiant entre l'objet portable et le terminal de manière à échanger ultérieurement de manière codée ou pour reconnaitre et autoriser un usage du terminal. Cette étape est ici mise en œuvre par l'intermédiaire d'un programme ou application d'appairage / initialisation AP1 contenu dans une mémoire programmable du microcontrôleur notamment Bluetooth (BT, 3) ou d'autres technologies radiofréquences. Le terminal distant de son côté contient un programme ou application logicielle correspondante AP2 dans un microcontrôleur (µC1).

La phase initiale s'effectue lors de la toute première connexion ou de préférence à chaque nouvelle connexion comme préliminaire à une communication principale de longue portée. Le cas échéant, un test permet de savoir s'il s'agit ou non de la toute première connexion ou de savoir si une initialisation antérieure a été effectuée favorablement au préalable. Dans le cas favorable, une nouvelle communication avec un dispositif distant connu de l'objet peut s'établir directement avec l'antenne de grande portée selon un mode de fonctionnement alternatif, ce qui permet de gagner du temps et d'éviter de rapprocher l'objet du dispositif distant pour communiquer en courte portée.

A la figure 2, l'objet portable correspond à un second mode de réalisation de l'invention. Il comporte les mêmes éléments que ceux de la figure 1, les mêmes références désignant les mêmes moyens à l'exception toutefois qu'il comprend un contrôleur de gestion des communications 33. Ce contrôleur comporte une partie traitement du signal telle une puce Bluetooth 13 et une partie microcontrôleur de gestion telle un microcontrôleur (µC2, 23), distinct du contrôleur Bluetooth 13, agencé de manière à communiquer avec la puce Bluetooth. La partie microcontrôleur de gestion 23 peut comprendre de préférence une interface avec une carte à puce 10 dans l'application porte badge par exemple ou avec tout autre périphérique.

Le microcontrôleur de gestion 23 comprend également une interface 19 reliée à une entrée 18 des moyens de sélection des communications courte et longue portées de manière à les piloter. Ces moyens sont comme précédemment le duplexeur 7. Le cas échéant, le microcontrôleur peut détecter directement dans quel état se trouvent les moyens de sélection.

Ce microcontrôleur (23 ou µC2) possède un port d'entrée/sortie de pilotage 19 reliée au duplexeur 7, de manière à sélectionner l'antenne comme précédemment. Selon ce mode de réalisation, la puce Bluetooth 13 délivre un signal ou une information sur l'état de la connexion Bluetooth au microcontrôleur 23. Le microcontrôleur 23 peut comprendre une application logicielle (PE) destinée à interroger régulièrement ou à des moments prédéterminés l'état de la connexion. Par exemple, le microcontrôleur (µC2) envoie une commande de lecture de l'état de la connexion dans un registre d'état (RE), renseigné en permanence par la puce Bluetooth.

Alternativement, régulièrement ou à des moments prédéterminés, la puce Bluetooth (BT) contient un programme (PR) apte à renseigner ou à prévenir l'extérieur (IHM, écran, signal sonore, etc.) de l'état instantané de la connexion Bluetooth ou de chaque changement d'état. Le microcontrôleur 23 de son côté peut scruter les signaux lui parvenant de la puce Bluetooth sur un point commun d'interface.

Le microcontrôleur de gestion de la communication 23 peut comprendre un programme (PS) destiné à piloter la sélection des antennes en fonction des informations notamment de connexion/déconnexion reçues de la puce Bluetooth.

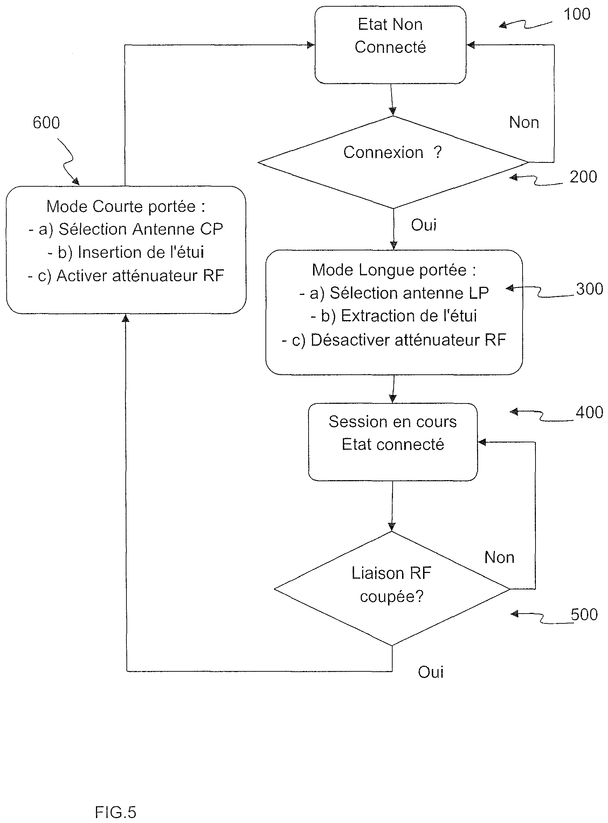

L'organigramme à la figure 5 décrit le fonctionnement des objets de communication radiofréquence implémentant l'invention. Les étapes 300 et 600 comprennent des rubriques a, b, c spécifiques respectivement aux objets des figures 1, 2 ensemble puis 3 et 4.

A l'étape 100, un utilisateur désirant utiliser une imprimante T (*ou un PC plus approprié),* présente son porte-badge (1A) à proximité de l'imprimante T (à moins de 50 cm). Lorsque l'objet est mis sous tension, le duplexeur se place dans un état permettant de sélectionner l'antenne dégradée 5. L'objet est au préalable dans un état non connecté ou dans un état d'attente de demande de connexion. Dans cet état non connecté, l'antenne sélectionnée par défaut (ou mise dans un état non connectée) est donc l'antenne 5 qui permet une communication de plus courte portée. Tant qu'aucune connexion n'est établie, l'objet portable reste dans cette configuration.

A l'étape 200, lorsque l'objet (1A) a effectué la phase d'initialisation et/ou d'appairage et/ou d'authentification et/ou d'identification et s'est connecté (et que cet état de connexion perdure) alors le contrôleur Bluetooth (BT) qui a détecté cet état de connexion par un test, transmet un signal (S) correspondant sur le port 9. Dans le cas de non connexion, l'organigramme de la figure 5 reboucle à l'étape précédente 100.

A l'étape 300, le signal (S) parvient au duplexeur 7 et provoque une sélection de l'antenne de longue portée (LP). Alternativement, en réponse à la détection de l'état connecté ou quand il est connecté, le contrôleur Bluetooth peut émettre un signal analogique ou logique de polarité différente à la précédente ou de niveau logique 0 ou 1 différent sur son port de sortie 9 (GPIO, General Purpose Input Output). Le signal (S) étant reçu par le duplexeur sur son entrée 8, cela provoque la sélection de l'antenne (LP) principale 4 permettant ainsi un dialogue de plus grande portée (LP) que la précédente communication.

A l'étape 400, l'objet (1A) reste dans cette configuration de session en cours (dans un état connecté) et ce, tant que la communication n'est pas coupée, de façon volontaire (arrêt de l'objet (1A), arrêt du PC, etc.) ou non (distance trop importante entre le PC et l'objet (1A)).

A l'étape 500, si la liaison radiofréquence RF n'est pas coupée, la session perdure. Dans le cas contraire (liaison RF coupée), la puce Bluetooth détecte un état de déconnexion et génère un signal représentatif de cet état en direction du duplexeur 7 pour provoquer à l'étape 600 la sélection de l'antenne dégradée 5, en vue de la prochaine connexion et/ou initialisation.

Le fonctionnement du mode de réalisation 2 est maintenant expliqué. Les étapes 100 et 200 se déroulent comme précédemment

A l'étape 300 dans le cas où la connexion est effective, le microcontrôleur 23 relié à la puce Bluetooth 13 reçoit l'information d'état de connexion "connectée" et déclenche une sélection de l'antenne 5 en émettant un signal de commande à destination du duplexeur selon une application interne de sélection des antennes (PS).

Pour cela, selon un mode de mise en œuvre, le microcontrôleur peut interroger régulièrement ou à des instants prédéterminés la puce Bluetooth opérant par exemple comme une puce esclave du microcontrôleur maître, à travers une commande de lecture dans un registre d'état (RE) de la puce Bluetooth (BT) en exécutant une application interne (PE). Il est aussi possible de gérer cette fonctionnalité sous interruption. Alternativement, le microcontrôleur peut rester à l'écoute des signaux émis par la puce Bluetooth représentatif de son état de connexion et apparaissant sur une interface commune avec la puce Bluetooth.

L'étape 400 peut se dérouler comme à la figure 1. A l'étape 500, lorsque la liaison RF est coupée, le microcontrôleur 23 reçoit une information correspondante provenant de la puce Bluetooth (signal logique de préférence ou information), l'information pouvant être obtenue comme les trois manières précédentes par une commande de lecture, par interruption ou en scrutant les signaux de la puce Bluetooth parvenant à une interface commune avec le microcontrôleur. En réponse, le microcontrôleur 23 émet un signal de commande aux moyens de sélection de l'antenne pour sélectionner l'antenne 5 dégradée ou la placer sur une position neutre.

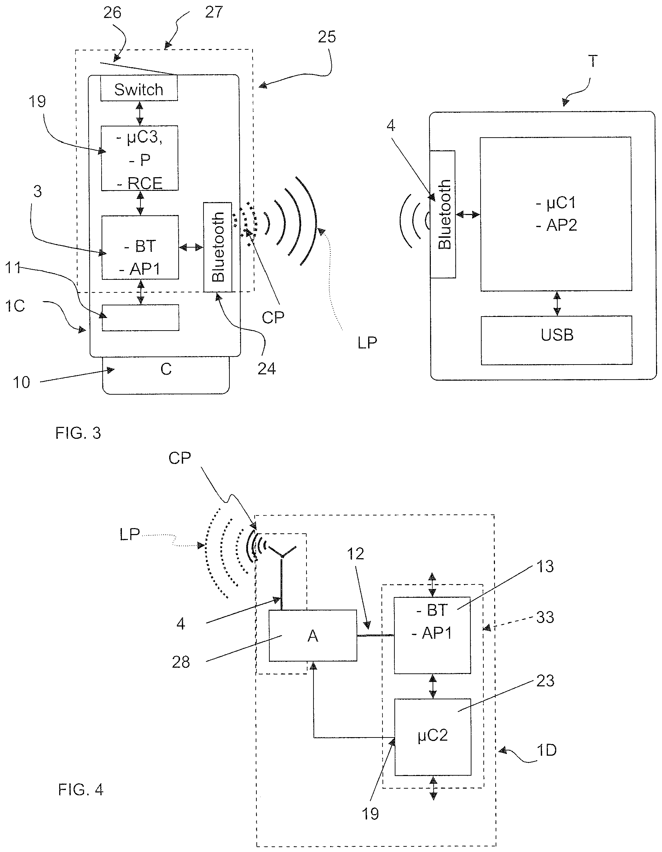

A la figure 3, un troisième mode de réalisation comprend un étui (25), boîtier ou moyen équivalent apte à recevoir ou masquer au moins en partie un objet portable. L'objet comporte ici une seule interface physique radiofréquence et une puce Bluetooth (BT, 3); L'interface 24 comprend une seule antenne du même type (LP) que l'antenne 4 de la figure 1. L'objet portable peut comporter un microcontrôleur (µC3) pour piloter la puce Bluetooth et réaliser d'autres fonctions de l'objet portable en vertu d'une application (P) de gestion de périphérique et/ou du comportement de l'objet comme expliqué ci-après. A priori, l'objet peut être tout objet portable électronique tel que une oreillette, une souris, un disque dur amovible, un assistant personnel (PDA), un cadre photo numérique, etc.

L'objet comporte un translateur de protocole 11 comme à la figure 1. Selon une caractéristique de l'invention, les moyens permettant une courte portée de la communication comprennent un obturateur ou écran de champ électromagnétique. Pour établir la phase d'initialisation, l'obturateur doit être en place de manière à limiter la portée, au moins en regard de l'antenne ou, de préférence, tout autour.

Selon un mode préféré, l'obturateur ou absorbeur 25 est sous forme d'enveloppe ou d'étui pouvant recevoir l'objet portable. L'objet comprend également un moyen de détection d'insertion de l'objet dans l'étui. Par exemple, ce moyen de détection prévoit un interrupteur 26 qui ferme un circuit lorsque l'objet est introduit jusqu'au fond de l'étui par interaction avec une paroi de fond 27 de l'étui. Tout autre moyen de détection d'insertion connu peut être prévu, tel qu'un capteur optique, capteur de fin de course de position, etc. Le capteur ou interrupteur est relié au microcontrôleur (µC3) pour l'informer de son état.

Les moyens de configuration de la communication comprennent ici un moyen d'atténuation (25) de la portée du signal qui comprend un matériau absorbant le champ radiofréquence et qui est agencé de manière à faire partiellement obstacle au champ radiofréquence suite à un état de communication déconnecté.

### L'objet fonctionne de la manière ci-après.

Pour établir une connexion, l'utilisateur introduit l'objet (1C) sous tension dans l'étui 25. L'interrupteur 26 (ou un capteur de position) en bout de l'objet est actionné quand l'objet parvient au fond de l'étui et un signal indiquant une position insérée est récupéré par le microcontrôleur (µC3) grâce l'actionnement de l'interrupteur.

Ensuite, en réponse au signal de position insérée, le microcontrôleur (µC3) déclenche l'étape d'initialisation (ou autorise la puce Bluetooth à l'établir) à travers l'unique antenne. Alternativement, l'autorisation peut être donnée par un signal du microcontrôleur (µC3) pilotant la puce Bluetooth. Elle peut aussi se traduire par une commande d'alimentation de la puce Bluetooth ou équivalent donnée par le microcontrôleur (µC3).

Grâce à l'obturateur en forme d'étui, la communication est atténuée pour devenir de courte portée (CP) aussi bien en émission qu'en réception par exemple à 50 cm ou 1 m. Le matériau utilisé dans l'étui pour faire écran ou atténuer la portée est de type métallique.

Lorsque la connexion est établie après la phase d'initialisation / identification, la puce Bluetooth émet un signal correspondant sur une sortie 19 de type GPIO. Alternativement, le microcontrôleur µC3 peut recevoir une information d'un état connecté comme décrit précédemment à la figure 2. Ce signal (ou information) peut être relayé grâce à l'application (P) pour avertir l'utilisateur que la connexion est établie et qu'il peut retirer son objet de l'étui pour augmenter la portée de la communication. Une fois l'objet en état connecté et l'étui retiré, la communication de type longue portée prend place et n'est pas coupée par le relâchement de l'interrupteur.

Suite à une déconnexion, la puce Bluetooth (BT) signale son état vers l'extérieur notamment auprès du microcontrôleur (µC3). Ce microcontrôleur (µC3) peut renseigner l'état de déconnexion dans un registre d'état (RCE) d'une mémoire interne. En vertu de l'exécution de l'application (P), le microcontrôleur n'autorise une nouvelle connexion avec un nouveau terminal qu'à condition de détecter une nouvelle introduction de l'objet dans l'étui après avoir reçu un signal de position insérée comme précédemment.

Toutefois, dans le cas où une nouvelle connexion doit être établie avec un même terminal avec lequel il y a déjà eu une étape d'initialisation au préalable, l'invention peut prévoir que l'objet puisse se connecter dès qu'il est à portée normale LP du terminal après une simple phase de reconnaissance réciproque entre eux, à l'aide par exemple d'un identifiant de l'objet et d'un identifiant du terminal et cela sans recourir à l'étui.

La figure 4 illustre deux autres modes de réalisation de l'objet de communication (1C) correspondant sensiblement à ceux de la figure 2 voire la figure 1 mais en ayant le duplexeur (D) remplacé par un atténuateur (A) et en ayant une seule antenne normale de type longue portée 4.

Les signaux de commande, qui provenaient des moyens de configurations 33 ou notamment de la puce Bluetooth (BT, 13) ou du microcontrôleur µC2 et qui étaient destinés à sélectionner une des deux antennes à la figure 2 ou 1, sont ici utilisés pour activer ou désactiver l'atténuateur A de champ radiofréquence de manière électronique. L'atténuateur est un composant électronique réagissant à une entrée 18. Il possède deux accès. Dans le mode de réalisation de la figure 4, un accès est relié à la puce Bluetooth 13 et l'autre accès à l'antenne 4. L'entrée 18 permet de choisir si le signal traversant l'atténuateur 28 doit être atténué ou non et ce, quelle que soit la direction de ce signal (de l'antenne 4 vers la puce Bluetooth 13 ou inversement). Un exemple d'atténuateur est fourni notamment par la société M/A - COM Inc. (Tyco Electronics) sous la référence AT-255 V7.

Comparativement au fonctionnement de l'invention de la figure 2 voire figure 1, à l'étape 300 quand le signal était destiné à sélectionner l'antenne de longue portée 4 ou pour établir une communication de longue portée (LP), dans le cas de l'objet de la figure 4, le même signal provoque une désactivation de l'effet de l'atténuateur.

A l'inverse quand le signal était destiné à sélectionner l'antenne de courte portée 5 à l'étape (600), ou pour établir une communication de faible portée (CP), dans l'objet de la figure 4, le même signal active l'atténuation.

Le cas échéant, l'invention peut prévoir un fonctionnement dans lequel en cas d'appairage déjà effectué au préalable la connexion peut s'effectuer directement en grande portée; Pour cela, soit l'utilisateur force la communication grande portée par une sélection directe manuelle, soit l'objet procède à un test répondant à la question de l'existence d'un appairage préalable. Dans ce cas favorable, l'objet tente d'effectuer une connexion avec les mêmes paramètres ou identifiant et/ou clé de session précédents directement en mettant en œuvre une grande portée; en cas d'échec de connexion, un message d'erreur est émis et l'utilisateur doit rapprocher l'objet pour du dispositif distant et lancer la phase d'initialisation.

## Revendications

1. Objet portable de communication (1A, 1B, 1C, 1D) comportant des moyens de communication radiofréquence avec un dispositif distant (T), lesdits moyens de communication étant configurés pour établir une première communication de courte portée (CP) pour initialisation et/ou appairage de la connexion et de la communication afin de permettre une seconde communication (LP) de plus longue portée que la première,
**caractérisé en ce que** lesdits moyens de communication radiofréquence (4, 5, 24) utilisent une seule interface physique de communication radiofréquence pour initialisation et/ou appairage, sans mise en œuvre d'une technologie radiofréquence de proximité, ladite première communication de courte portée et ladite seconde communication de plus longue portée étant basées sur une même technologie de communication radiofréquence.

2. Objet portable selon larevendication précédente, **caractérisé en ce qu'**il comprend un composant de communication radiofréquence (3, 13, 33) apte à délivrer une information relative à un état de communication respectivement connecté ou non connecté.

3. Objet portable selon l'une quelconque des revendications précédentes, **caractérisé en ce qu'**il comprend des moyens de configuration de la communication (23, 33, 7, 28) aptes à mettre en œuvre d'une communication courte portée CT suite à un état de communication déconnectée.

4. Objet portable selon l'une quelconque des revendications précédentes, **caractérisé en ce qu'**il comprend des moyens de configuration de la communication (23, 33, 7, 28) aptes à mettre en œuvre une communication longue portée LP et de maintien suite à un état de communication connectée.

5. Objet portable selon l'une quelconque des revendications précédentes, **caractérisé en ce qu'**il comprend une première antenne (5) pour la première communication (CP) et une seconde antenne (4) distincte et appartenant à la même technologie pour la seconde communication (LP), ladite première antenne étant configurée de manière à permettre une portée dégradée (CP) par rapport à celle permise par la seconde antenne (4).

6. Objet portable selon la revendication précédente, **caractérisé en ce que** la première antenne (5) présente des caractéristiques propres qui n'autorisent qu'une communication de plus courte portée que celle permise avec la seconde antenne (4).

7. Objet portable selon l'une des revendications 3 à 5, **caractérisé en ce que** les moyens de configuration comprennent un moyen de sélection (7) pour sélectionner la première antenne (5) suite à un état de communication déconnectée et sélectionner la seconde antenne (4) suite à un état de communication connectée

8. Objet portable selon la revendication précédente, **caractérisé en ce qu'**il ledit moyens de sélection (7) comprend un duplexeur (7).

9. Objet portable selon l'une des revendications 5 à 8, **caractérisé en ce que** la seconde antenne (4) est du type PIFA ou du type intégrée.

10. Objet portable selon l'une des revendications 3 à 5, **caractérisé en ce que** les moyens de configuration de la communication comprennent un moyen d'atténuation électronique (28) de la portée du signal, ledit moyen d'atténuation pouvant être activé suite à un état de communication déconnectée et désactivé suite à un état de communication connectée.

11. Objet portable selon l'une des revendications 3 à 6, caractérisé en ce les moyens de configuration de la communication comprennent un moyen d'atténuation (25) de la portée du signal comportant un matériau absorbant le champ radiofréquence et agencé de manière à faire partiellement obstacle au champ radiofréquence suite à un état de communication déconnecté.

12. Procédé pour établir une communication radiofréquence (LP) entre un objet portable de communication (1A, 1B, 1C, 1D) et un dispositif distant (T), dans lequel une première communication de courte portée (CP) pour une initialisation et/ou appairage de la connexion et de la communication est établie pour permettre une communication (LP) de plus longue portée que la première,
**caractérisé en ce qu'**il utilise une même technologie de communication radiofréquence pour l'initialisation et/ou appairage, sans mise en œuvre d'une technologie radiofréquence de proximité, ladite première communication de courte portée et ladite seconde communication de longue portée étant basée sur une même technologie de communication radiofréquence.

13. Procédé selon la revendication 12, **caractérisé en ce qu'**il comprend une étape de mise en œuvre d'une communication courte portée (CT) suite à un état de communication longue portée (LP) déconnectée.

14. Procédé selon l'une des revendications 12 à 13, **caractérisé en ce qu'**il comprend une étape de mise en œuvre d'une communication longue portée (LP) suite à un état de communication courte portée connectée.

15. Procédé selon l'une des revendications 12 à 14, **caractérisé en ce que** la première communication de courte portée est établie en mettant en œuvre un moyen d'atténuation (25, 28) de la portée du signal.

## Patentansprüche

1. Tragbarer Kommunikationsgegenstand (1A, 1B, 1C, 1D), der Mittel zur Funkkommunikation mit einer entfernten Vorrichtung (T) umfasst, wobei die Kommunikationsmittel dazu ausgelegt sind, eine erste Kommunikation mit kurzer Reichweite (CP) für die Initialisierung und/oder das Koppeln der Verbindung und der Kommunikation aufzubauen, um eine zweite Kommunikation (LP) mit größerer Reichweite als die der ersten zu ermöglichen,
**dadurch gekennzeichnet, dass** die Funkkommunikationsmittel (4, 5, 24) eine einzige physische Funkkommunikationsschnittstelle für die Initialisierung und/oder das Koppeln ohne Implementierung einer Nahfeld-Funktechnologie verwenden, wobei die erste Kommunikation mit kurzer Reichweite und die zweite Kommunikation mit größerer Reichweite auf derselben Funkkommunikationstechnologie beruhen.

2. Tragbarer Gegenstand nach dem vorstehenden Anspruch, **dadurch gekennzeichnet, dass** er ein Funkkommunikationsbauteil (3, 13, 33) umfasst, das dazu geeignet ist, eine Information jeweils über einen verbundenen bzw. nicht verbundenen Kommunikationszustand auszugeben.

3. Tragbarer Gegenstand nach einem der vorstehenden Ansprüche, **dadurch gekennzeichnet, dass** er Mittel zur Konfiguration der Kommunikation (23, 33, 7, 28) umfasst, die geeignet sind, im Anschluss an einen getrennten Kommunikationszustand eine Kommunikation mit kurzer Reichweite CT zu implementieren.

4. Tragbarer Gegenstand nach einem der vorstehenden Ansprüche, **dadurch gekennzeichnet, dass** er Mittel zur Konfiguration der Kommunikation (23, 33, 7, 28) umfasst, die dazu geeignet sind, im Anschluss an einen getrennten Kommunikationszustand eine Kommunikation mit großer Reichweite LP zu implementieren.

5. Tragbarer Gegenstand nach einem der vorstehenden Ansprüche, **dadurch gekennzeichnet, dass** er eine erste Antenne (5) für die erste Kommunikation (CP) und eine zweite Antenne (4), die separat ist und derselben Technologie angehört, für die zweite Kommunikation (LP) umfasst, wobei die erste Antenne derart ausgelegt ist, dass sie eine minderwertigere Reichweite (CP) im Vergleich zu der erlaubt, die von der zweiten Antenne (4) erlaubt wird.

6. Tragbarer Gegenstand nach dem vorstehenden Anspruch, **dadurch gekennzeichnet, dass** die erste Antenne (5) spezifische Eigenschaften aufweist, die nur eine Kommunikation mit kürzerer Reichweite gestatten als die, die mit der zweiten Antenne (4) erlaubt ist.

7. Tragbarer Gegenstand nach einem der Ansprüche 3 bis 5, **dadurch gekennzeichnet, dass** die Konfigurationsmittel ein Auswahlmittel (7) umfassen, um im Anschluss an einen getrennten Kommunikationszustand die erste Antenne (5) auszuwählen und im Anschluss an einen verbundenen Kommunikationszustand die zweite Antenne (4) auszuwählen.

8. Tragbarer Gegenstand nach dem vorstehenden Anspruch, **dadurch gekennzeichnet, dass** das Auswahlmittel (7) einen Duplexer (7) umfasst.

9. Tragbarer Gegenstand nach einem der Ansprüche 5 bis 8, **dadurch gekennzeichnet, dass** die zweite Antenne (4) vom PIFA-Typ oder vom integrierten Typ ist.

10. Tragbarer Gegenstand nach einem der Ansprüche 3 bis 5, **dadurch gekennzeichnet, dass** die Mittel zur Konfiguration der Kommunikation ein elektronisches Dämpfungsmittel (28) der Reichweite des Signals umfassen, wobei das Dämpfungsmittel im Anschluss an einen getrennten Kommunikationszustand aktiviert und im Anschluss an einen verbundenen Kommunikationszustand deaktiviert werden kann.

11. Tragbarer Gegenstand nach einem der Ansprüche 3 bis 6, **dadurch gekennzeichnet, dass** die Mittel zur Konfiguration der Kommunikation ein Dämpfungsmittel (25) der Reichweite des Signals umfassen, das ein Material umfasst, das das Funkfeld absorbiert, und derart eingerichtet ist, dass es für das Funkfeld im Anschluss an einen getrennten Kommunikationszustand teilweise ein Hindernis bildet.

12. Verfahren zum Aufbauen einer Funkkommunikation (LP) zwischen einem tragbaren Kommunikationsgegenstand (1A, 1B, 1C, 1D) und einer entfernten Vorrichtung (T), wobei eine erste Kommunikation mit kurzer Reichweite (CP) für eine Initialisierung und/oder ein Koppeln der Verbindung und der Kommunikation aufgebaut wird, um eine Kommunikation (LP) mit größerer Reichweite als die der ersten zu erlauben,
**dadurch gekennzeichnet, dass** es dieselbe Funkkommunikationstechnologie für die Initialisierung und/oder das Koppeln ohne Implementierung einer Nahfeld-Funktechnologie verwendet, wobei die erste Kommunikation mit kurzer Reichweite und die zweite Kommunikation mit großer Reichweite auf derselben Funkkommunikationstechnologie beruhen.

13. Verfahren nach Anspruch 12, **dadurch gekennzeichnet, dass** es einen Schritt des Implementierens einer Kommunikation mit kurzer Reichweite (CT) im Anschluss an einen getrennten Kommunikationszustand mit großer Reichweite (LP) umfasst.

14. Verfahren nach einem der Ansprüche 12 bis 13, **dadurch gekennzeichnet, dass** es einen Schritt des Implementierens einer Kommunikation mit großer Reichweite (LP) im Anschluss an einen verbundenen Kommunikationszustand mit kurzer Reichweite umfasst.

15. Verfahren nach einem der Ansprüche 12 bis 14, **dadurch gekennzeichnet, dass** die erste Kommunikation mit kurzer Reichweite aufgebaut wird, indem ein Dämpfungsmittel (25, 28) der Reichweite des Signals implementiert wird.

## Claims

1. Portable communication object (1A, 1B, 1C, 1D) comprising means for radio frequency communication with a remote device (T), said communication means being configured to establish a first short-range communication (CP) for initialisation and/or pairing of the connection and communication in order to allow a second communication (LP) having a longer range than the first,
**characterised in that** said radio frequency communication means (4, 5, 24) use a single physical radio frequency communication interface for initialisation and/or pairing, without using proximity radio frequency technology, said first short-range communication and said second longer-range communication being based on the same radio frequency communication technology.

2. Portable object according to the preceding claim, **characterised in that** it comprises a radio frequency communication component (3, 13, 33) capable of issuing an item of information relating to a connected or disconnected status of the communication, respectively.

3. Portable object according to any one of the preceding claims, **characterised in that** it comprises means (23, 33, 7, 28) for configuring the communication capable of implementing a short-range communication CT in response to a disconnected status of the communication.

4. Portable object according to any one of the preceding claims, **characterised in that** it comprises means (23, 33, 7, 28) for configuring the communication capable of implementing a long-range communication LP and of holding the communication in response to a connected status of the communication.

5. Portable object according to any one of the preceding claims, **characterised in that** it comprises a first antenna (5) for the first communication (CP) and a separate second antenna (4) using the same technology for the second communication (LP), said first antenna being configured so as to allow a degraded range (CP) relative to that allowed by the second antenna (4).

6. Portable object according to the preceding claim, **characterised in that** the first antenna (5) has specific characteristics which only allow a communication having a shorter range than that permitted with the second antenna (4).

7. Portable object according to one of claims 3 to 5, **characterised in that** the configuration means comprise a selection means (7) for selecting the first antenna (5) in response to a disconnected status of the communication and selecting the second antenna (4) in response to a connected status of the communication

8. Portable object according to the preceding claim, **characterised in that** said selection means (7) comprises a duplexer (7).

9. Portable object according to one of claims 5 to 8, **characterised in that** the second antenna (4) is of the PIFA type or of the integrated type.

10. Portable object according to one of claims 3 to 5, **characterised in that** the means for configuring the communication comprise an electronic means (28) for attenuating the signal range, said attenuation means being able to be activated in response to a disconnected status of the communication and deactivated in response to a connected status of the communication.

11. Portable object according to one of claims 3 to 6, **characterised in that** the means for configuring the communication comprise a means (25) for attenuating the signal range comprising a material absorbing the radio frequency field and arranged so as partially obstruct the radio frequency field in response to a disconnected status of the communication.

12. Method for establishing a radio frequency communication (LP) between a portable communication object (1A, 1B, 1C, 1D) and a remote device (T), wherein a first short-range communication (CP) for initialisation and/or pairing of the connection and the communication is established to allow a communication (LP) of longer range than the first,
**characterised in that** it uses the same radio frequency communication technology for initialisation and/or pairing, without the use of proximity radio frequency technology, said first short-range communication and said second long-range communication being based on the same radio frequency communication technology.

13. Method according to claim 12, **characterised in that** it comprises a step of implementing a short-range communication (CT) in response to a disconnected status of long-range communication (LP).

14. Method according to one of claims 12 to 13, **characterised in that** it comprises a step of implementing a long-range communication (LP) in response to a connected status of short-range communication.

15. Method according to one of claims 12 to 14, **characterised in that** the first short-range communication is established by implementing a means (25, 28) for attenuating the signal range.
